# FASCICULE DE BREVET EUROPEEN

(11) **EP 1 330 630 B1**
(45) Date de publication et mention de la délivrance du brevet: **09.06.2010**
(21) Numéro de dépôt: 01983657.6
(22) Date de dépôt: 30.10.2001
(51) Int. Cl.: G01D 5/14, G01D 5/16, B62D 15/02, G01P 3/44

(54) **PALIER A ROULEMENT INSTRUMENTE POUR VOLANT DE COMMANDE**
MIT SENSOR AUSGESTATTETES WÄLZLAGER FÜR LENKRÄDER
INSTRUMENTED BEARING FOR STEERING WHEEL

(30) Priorité: 02.11.2000 FR 0014044
(43) Date de publication de la demande: 30.07.2003
(73) Titulaire: Aktiebolaget SKF, 415 50 Göteborg (SE)
(72) Inventeur: LANDRIEVE, Franck, F-37230 Fondettes (FR)
(74) Mandataire: Casalonga, Axel
(86) Numéro de dépôt international: PCT/FR2001/003373
(87) Numéro de publication internationale: WO 2002/037058

(56) Documents cités:
- EP-A- 0 856 720
- EP-A- 0 932 019
- EP-A- 0 983 924
- DE-U- 29 606 042

## Description

La présente invention a pour objet un dispositif de palier à roulement instrumenté qui peut être utilisé en particulier en association avec un volant de commande par fil, par exemple pour un engin de manutention ou un engin de travaux publics.

Le palier à roulement est du type comprenant un élément extérieur et un élément intérieur, entre lesquels est prévue au moins une rangée d'éléments roulants. L'un de ces éléments reste fixe par rapport à un bâti, tandis que l'autre peut être entraîné en rotation par le volant de commande. Le roulement instrumenté comporte un moyen de détection des paramètres de rotation de l'élément tournant, de façon à commander un actionneur électrique ou électro-hydraulique.

On utilise de plus en plus couramment dans les engins de manutention, par exemple les chariots élévateurs ou certains engins de travaux publics, une commande de direction électrique. Le volant, actionné en rotation par le conducteur, est monté sur un support fixe par l'intermédiaire d'un ou deux paliers à roulement auxquels on adjoint un système de détection de la rotation, intégré ou non aux paliers à roulement. Ce système de détection délivre un signal représentatif de la rotation du volant (angle, sens et vitesse angulaire) qui est acheminé vers un système de traitement des signaux, puis vers un système électronique de logique de pilotage qui envoie à son tour des signaux appropriés à des actionneurs électriques ou électro-hydrauliques qui provoquent l'orientation des roues du véhicule suivant les ordres donnés par le conducteur.

Un exemple d'un tel dispositif est illustré dans la demande de brevet français 2 782 970, dans laquelle un système de freinage du volant a en outre été prévu afin de générer un couple résistant favorisant la précision et la fiabilité de conduite du véhicule.

Ces dispositifs déjà connus, bien que techniquement satisfaisants, présentent toutefois certains inconvénients, notamment en ce qui concerne la compacité et la facilité de montage sur le véhicule ou sur la machine.

Dans les dispositifs conventionnels, utilisant par exemple des capteurs à effet Hall coopérant avec un anneau aimanté multipolaire, il est difficile d'obtenir un codage absolu permettant de connaître la position angulaire absolue de la partie tournante par rapport à un "zéro" de référence prédéterminé, la qualité de la mesure dépendant du nombre et de la précision de réalisation des pôles de l'anneau aimanté.

D'autre part, l'obtention d'un codage absolu par un anneau multipolaire suppose que ce dernier comporte les informations additionnelles permettant l'identification d'un pôle de référence, ce qui se fait au détriment de la simplicité, du coût et de l'encombrement.

La demande de brevet européen 0 932 019 décrit un capteur comprenant un disque rotatif équipé d'un barreau aimanté pouvant se déplacer devant un capteur comprenant une magnétorésistance. Ce dispositif utilisé pour une détermination de position angulaire ne comporte cependant aucun palier à roulement capable d'assurer un support convenable de la partie tournante. De plus, rien n'est prévu pour un traitement intégré et fiable du signal émis par le capteur.

La présente invention a pour objet d'éliminer les difficultés des dispositifs antérieurs et de réaliser un palier à roulement instrumenté qui soit particulièrement compact et fiable, et qui permette en outre une détermination précise de position angulaire absolue.

Le palier à roulement instrumenté selon l'invention définie dans la revendication indépendante 1, qui peut être utilisé notamment pour un volant de commande par fil d'un engin de manutention muni d'un système de commande de direction électrique, comprend un élément extérieur et un élément intérieur dont l'un est mobile en rotation autour d'un axe par rapport à l'autre qui est fixe, au moyen d'au moins une rangée d'éléments roulants disposés entre lesdits éléments. Le dispositif comprend également des moyens de détection des paramètres de rotation de l'élément tournant qui comprennent un capteur magnétosensible disposé sur une partie fixe et un aimant permanent disposé sur une partie tournante, en regard du capteur, avec ses parties polaires de part et d'autre de l'axe de rotation.

L'aimant permanent est monté sur une face frontale de l'élément tournant, du côté opposé au volant de commande.

On obtient ainsi de manière très simple et donc économique, un codage absolu du déplacement angulaire de la partie tournante.

Dans un mode de réalisation préféré, le capteur magnétosensible comprend une pluralité de cellules à effet Hall réparties autour d'un point correspondant à l'axe de rotation de la partie tournante équipée de l'aimant permanent.

Le capteur magnétosensible peut être avantageusement réalisé sous la forme d'une puce de circuit intégré et peut comprendre une pluralité de broches de contact permettant l'alimentation en courant électrique, la sortie du signal et la programmation d'une position prédéterminée angulaire de la partie fixe définissant un angle zéro de référence.

Dans un autre mode de réalisation, le capteur magnétosensible comprend une magnétorésistance centrée sur l'axe de rotation.

Le capteur magnétosensible est fixé sur une plaque de circuit imprimé montée fixe en rotation dans un espace défini entre le palier à roulement et un couvercle de fermeture pouvant présenter un connecteur. De cette manière, les moyens de support du volant et l'ensemble des moyens électroniques de traitement du signal sont intégrés sous la forme d'une unité. Une fois cette unité fixée sur un véhicule ou une machine, il suffit de monter le volant de commande et de brancher un câble électrique sur le connecteur pour pouvoir faire fonctionner l'ensemble.

Les moyens électroniques de traitement des signaux et les moyens électroniques pour le pilotage sont de préférence disposés sur la plaque de circuit imprimé qui porte déjà le capteur magnétosensible. Dans ce cas, un simple changement de circuit imprimé permet aisément d'adapter le dispositif à une autre application.

La liaison entre le connecteur porté par le couvercle et la plaque de circuit imprimé est de préférence effectuée par des moyens de contact, évitant ainsi tout câble de connection.

De préférence, le capteur fournit un signal de position angulaire absolue par rapport à une position zéro de référence.

Dans un mode de réalisation préféré, l'aimant permanent est monté dans un évidement de l'élément tournant de façon à ne pas faire saillie à l'extérieur de ladite face frontale.L'encombrement axial du dispositif est ainsi réduit au maximum.

Dans un mode de réalisation avantageux, la partie tournante portant l'aimant permanent et une partie au moins du volant de commande, voire la totalité de ce volant, forment une seule pièce monobloc. Le montage se trouve alors particulièrement simplifié.

L'aimant permanent peut être une barrette aimanté bipolaire ou un élément cylindrique dont les pôles sont situés de part et d'autre de l'axe de rotation de la partie tournante.

L'invention sera mieux comprise à l'étude de deux modes de réalisation particuliers décrits à titre d'exemples nullement limitatifs et illustrés par des dessins annexés sur lesquels :
- la figure 1 représente une vue en coupe axiale d'un mode de réalisation d'un dispositif de palier à roulement instrumenté selon l'invention ;
- la figure 2 représente schématiquement une position prise par l'aimant permanent par rapport au capteur magnétosensible du dispositif de la figure 1 ; et
- la figure 3 représente schématiquement une position prise par un aimant permanent de forme cylindrique, selon un deuxième mode de réalisation, par rapport à un ensemble de cellules à effet Hall.

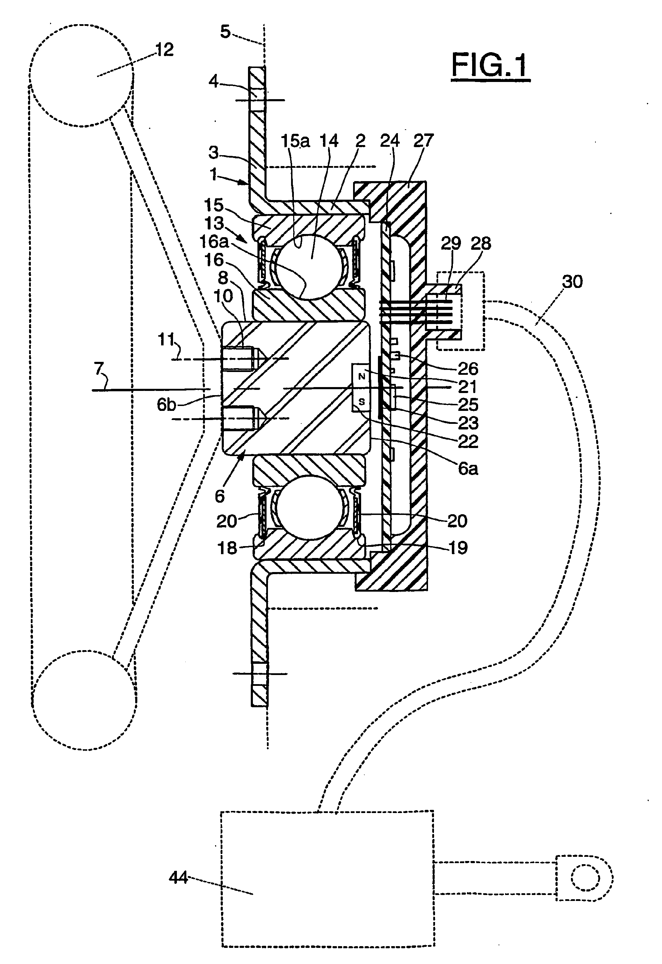

Dans le mode de réalisation illustré sur la figure 1, le dispositif de palier à roulement instrumenté comprend un élément extérieur 1, de forme annulaire réalisé en tôle emboutie dans l'exemple illustré, comportant une portion tubulaire 2 et une portion radiale 3 s'étendant à une extrémité de la portion tubulaire vers l'extérieur. La portion radiale 3 est pourvue d'une pluralité de trous de fixation 4 aptes à recevoir des vis en vue d'une fixation sur un bâti fixe 5, représenté schématiquement.

Le dispositif de palier à roulement comprend en outre un élément intérieur 6 centré sur le même axe 7 que l'élément extérieur 1. L'élément intérieur 6 se présente sous la forme d'une pièce cylindrique pleine ayant une portée cylindrique extérieure 8. Une pluralité de trous 10 est prévue à une extrémité de l'élément tournant intérieur 6 pour recevoir des vis schématisées en 11, par exemple destinées à la fixation d'un volant de manoeuvre rotatif 12, représenté schématiquement en pointillés. Le volant 12 est fixé sur une extrémité axiale de la partie tournante supportant un aimant 21 à son autre extrémité. L'élément intérieur 6 présente une face radiale 6b à partir de laquelle sont formés les trous 10.

Dans le mode de réalisation illustré, un roulement à billes 13 est monté entre les éléments extérieur 1 et intérieur 6. Le roulement à billes 13 comporte une rangée de billes 14 disposées entre une bague extérieure 15 montée dans l'alésage de la portion tubulaire 2 de l'élément extérieur 1, et une bague intérieure 16 montée sur la portée cylindrique 8 de l'élément intérieur 6.

Dans une variante, on pourrait bien entendu prévoir que les éléments roulants tels que les billes 14 ou des rouleaux, des aiguilles, etc., soient montés directement en contact avec les éléments extérieur 1 et intérieur 6 par l'intermédiaire de chemins de roulement aménagés sur lesdits éléments extérieur et intérieur.

La bague extérieure 15, emmanchée dans l'alésage de la portion tubulaire 2 de l'élément extérieur 1, est pourvue d'un chemin de roulement 15a pour les éléments roulants 14. La bague intérieure 16, emmanchée sur la portée cylindrique 8 de l'élément intérieur 6, est pourvue d'un chemin de roulement 16a pour les éléments roulants 14. La bague extérieure 15 est en outre pourvue de deux rainures symétriques 18 et 19 formées sur son alésage, de part et d'autre du chemin de roulement 15a, permettant la fixation d'organes d'étanchéité 20 qui viennent frotter contre une portée de la bague intérieure 16.

L'élément intérieur 6 tournant comporte un aimant permanent 21 réalisé sous la forme d'une barrette aimentée bipolaire qui est, dans l'exemple illustré, logé dans un évidement 22 pratiqué sur la face frontale 6a de l'élément intérieur tournant 6 de façon à ne pas faire saillie de cette face frontale 6, les faces 6a et 6b formant les extrémités opposées de l'élément intérieur 6. L'aimant permanent 21 se trouve disposé sur l'élément intérieur tournant 6 à l'opposé du volant 12. Les parties polaires Nord et Sud de l'aimant permanent 21 sont disposées de part et d'autre de l'axe de rotation 7.

Le capteur magnétosensible se présente ici sous la forme d'une magnétorésistance 23 disposée en regard de l'aimant permanent 21, légèrement écartée de celui-ci par un entrefer, la magnétorésistance 23 étant fixée sur une plaque de circuit imprimé 24 disposée dans un plan radial et fixée sur l'élément extérieur fixe 2 par tous moyens appropriés tels que vis, collage etc ... La plaque de circuit imprimé 24 comporte à la fois les moyens électroniques 25 de traitement des signaux issus de la magnéto-résistance 23 et des moyens électroniques 26 constituant une logique de pilotage pour un actionneur, par exemple du type électrohydraulique, référencé 44 et illustré sur la figure 1 en pointillés.

Dans le mode de réalisation représenté, l'aimant 21 et le capteur sont directement en regard l'un de l'autre. En variante, le capteur peut être monté du côté opposé de la plaque 24, c'est-à-dire du côté des moyens électroniques 25 et 26. L'aimant 21 et le capteur sont alors séparés par, outre l'entrefer, la plaque 24.

Le dispositif dans son ensemble est fermé du côté de la plaque de circuit imprimé 24 par une cloison radiale sous la forme d'un couvercle de fermeture 27 réalisé par exemple en matière synthétique, solidarisé par tous moyens appropriés aux bords extérieurs de la portion tubulaire 2 de l'élément extérieur fixe 1. On pourrait également prévoir une cloison radiale issue directement de la portion tubulaire 2.

Dans le mode de réalisation illustré, le couvercle 27 comporte en outre un connecteur 28 dont les broches 29 sont reliées électriquement directement à la sortie de l'électronique de pilotage prévue sur la plaque de circuit imprimé 24. La connexion se fait d'une manière pratiquement directe, sans câble de connexion, avec une grande compacité et en éliminant tout risque de détérioration. La transmission vers l'actionneur 44 des ordres de pilotage résultant de la rotation du volant de commande 12 se fait par le câble 30 qui vient se connecter directement sur le connecteur 28.

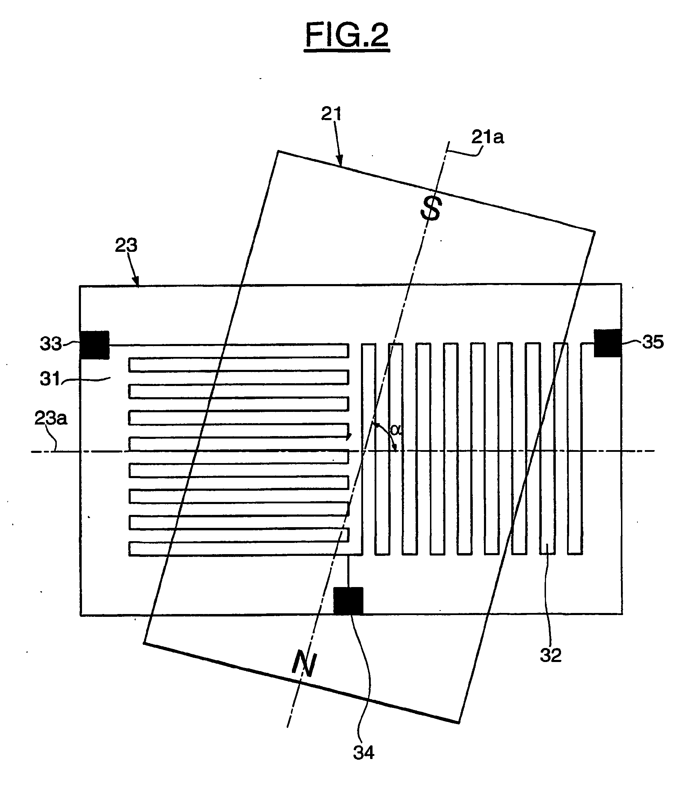

La figure 2 illustre en plan et schématiquement la magnétorésistance 23 et l'aimant permanent 21 représentés dans une position relative particulière. A titre d'exemple, les axes respectifs de symétrie 23a et 21a de la magnétorésistance 23 et de l'aimant permanent 21 font entre eux un angle α qui correspond à une rotation du volant de commande 12.

La magnétorésistance 23 se présente sous là forme d'une puce comportant deux éléments conducteurs résistants 31 et 32 constitués chacun sous la forme de fils résistants disposés en méandres allongés selon un axe. Les méandres de l'élément résistant 31 sont disposés parallèlement à l'axe longitudinal 23a tandis que les méandres de l'élément résistant 32 sont disposés perpendiculairement à l'axe 23a. Une des extrémités de l'élément résistant 31 est connectée à une borne d'alimentation 33 tandis que l'autre extrémité est connectée à une borne de sortie 34. Dans les mêmes conditions, l'élément résistant 32 est connecté à l'une de ses extrémités à une borne d'entrée 35 et à son autre extrémité à la borne de sortie 34 qui constitue donc une borne commune aux deux éléments résistants 31 et 32.

Compte tenu de la disposition des méandres constituant les éléments résistants 31 et 32, la variation de champ magnétique à laquelle est soumise la magnétorésistance 23, pour une position angulaire déterminée de l'aimant permanent 21, génère dans la magnétorésistance une variation de résistance, fournissant un signal électrique sous la forme d'un courant dont la tension est représentative de la valeur de l'angle α entre l'aimant permanent 21 et la magnétorésistance 23.

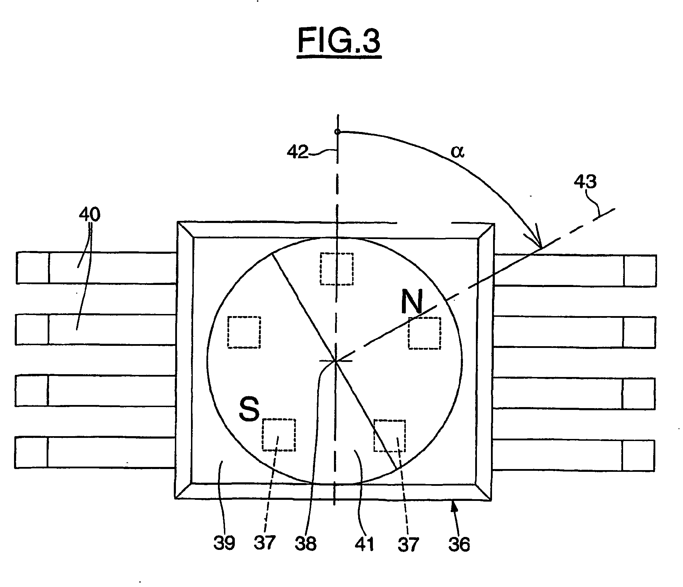

La figure 3 illustre un deuxième mode de réalisation dans lequel le capteur magnétosensible utilisé, référencé 36 dans son ensemble, comprend une pluralité de cellules à effet Hall 37 au nombre de cinq dans l'exemple illustré et réparties de manière régulière autour d'un point imaginaire 38 par où passe l'axe de rotation de la partie tournante du dispositif. Les cellules à effet Hall 37 sont intégrées dans une puce de circuit intégré 39 de très faible dimension, présentant par exemple quelques millimètres de côté et environ 1 mm d'épaisseur. La puce de circuit intégré 39 comprend avantageusement un circuit de prétraitement du signal, non représenté sur la figure, ainsi qu'une pluralité de broches de contact 40, ici au nombre de six dans l'exemple illustré, permettant d'assurer l'alimentation du courant électrique, la sortie du signal donnant la position angulaire absolue ainsi que la programmation de la position de l'angle zéro de référence.

L'aimant pemanent 41 utilisé dans l'exemple de réalisation illustré sur la figure 3, est un élément cylindrique dont chaque demi-secteur définit un pôle aimanté Nord ou Sud, comme illustré sur la figure. L'axe de l'élément cylindrique 41 est confondu avec le point fictif 38.

La rotation de l'aimant 41 devant les différentes cellules à effet Hall 37 provoque dans chaque cellule 37 des variations du courant électrique de sortie en réponse aux variations de champ magnétique. L'intégration des variations du courant électrique de sortie de chacune des cellules 37 fournit un signal représentatif de la position angulaire α de l'aimant, l'angle α étant défini entre l'axe 42 qui représente la position "zéro" de référence et l'axe 43 joignant les deux pôles Nord et Sud de l'aimant permanent 41.

Le dispositif peut ainsi être avantageusement utilisé pour obtenir un codage fournissant la position angulaire absolue de la partie tournante par rapport à une position zéro déterminée de la partie fixe.

Un organe de freinage, non illustré sur la figure, peut également être prévu de façon à générer un couple de frottement entre les organes mobiles en rotation et les organes fixes et améliorer ainsi la précision dans les mouvements de rotation du volant de commande. A titre d'exemple d'un tel organe de freinage, on pourra se référer à la demande de brevet français n° 2 782 970.

Le dispositif de l'invention permet ainsi d'obtenir avec un très faible encombrement, en particulier dans le sens axial, un codage absolu du déplacement angulaire de la partie tournante.

La structure du dispositif permet l'utilisation d'un palier à roulement standard comportant sur chacun de ses côtés un dispositif d'étanchéité approprié.

La structure compacte du dispositif permet d'augmenter la fiabilité lors des manipulations du palier à roulement en éliminant tout risque de perte de pièces, les éléments sensibles étant en outre parfaitement protégés.

On pourrait également envisager, dans un mode de réalisation avantageux, de constituer l'élément intérieur tournant portant l'armant permanent sous la forme d'une pièce monobloc avec tout ou partie du volant de commande simplifiant, ainsi encore le montage de l'ensemble.

Bien que la description ait été faite dans l'exemple illustré avec un élément extérieur fixe et un élément intérieur tournant, on comprendra que l'invention puisse également s'appliquer sans modification majeure à une structure dans laquelle l'élément extérieur serait tournant tandis que l'élément intérieur serait fixe.

L'invention offre un système multi-usages se présentant sous la forme d'un module pouvant se monter sur un bâti fixe et pouvant être connecté à divers types d'actionneurs (actionneurs électriques pour un véhicule routier, un bateau muni d'un système "steer-by-wire" par exemple).

## Revendications

1. Dispositif de roulement instrumenté, pour volant de commande (12) par fil, comprenant un élément extérieur (1) et un élément intérieur (6) dont l'un est mobile en rotation autour d'un axe par rapport à l'autre qui est fixe, au moyen d'un roulement (13) disposé entre lesdits éléments et pourvu d'au moins une rangée d'éléments roulants (14), et des moyens de détection des paramètres de rotation de l'élément intérieur tournant (6), **caractérisé en ce que** l'élément intérieur (6) comporte une première face frontale (6b) pour la fixation du volant de commande, **en ce que** les moyens de détection comprennent un capteur magnétosensible (23, 36) disposé sur une partie fixe et un aimant permanent (21, 41) disposé sur une partie tournante, en regard dudit capteur, avec ses parties polaires de part et d'autre de l'axe de rotation, l'aimant permanent (21, 41) étant monté sur une seconde face frontale (6a) de l'élément intérieur (6) du côté opposé au volant de commande, et **en ce que** le capteur magnétosensible (23, 36) est fixé sur une plaque de circuit imprimé (24) montée fixe en rotation dans un espace défini entre le roulement et une cloison (27) fermant ledit espace, la cloison (27) étant fixée sur l'élément extérieur (1) et comprenant un connecteur (28) pourvu de broches (29) de contact reliées électriquement à la plaque de circuit imprimé (24).

2. *Dispositif* selon la revendication 1, **caractérisé par le fait que** le capteur magnétosensible (36) comprend une pluralité de cellules à effet Hall (37) réparties autour d'un point (38) correspondant à l'axe de rotation de la partie tournante équipée de l'aimant permanent (21).

3. *Dispositif* selon la revendication 2, **caractérisé par le fait que** le capteur magnétosensible (36) est réalisé sous la forme d'une puce de circuit intégré (39).

4. *Dispositif* selon la revendication 1, **caractérisé par le fait que** le capteur magnétosensible (23) comprend une magnétorésistance (31, 32) centrée sur l'axe de rotation.

5. *Dispositif* selon l'une quelconque des revendications précédentes **caractérisé par** le fait la cloison (27) est formée sur un couvercle de fermeture.

6. *Dispositif* selon l'une quelconque des revendications précédentes*,* **caractérisé par le fait que** la cloison (27) comprend un connecteur (28).

7. *Dispositif* selon l'une quelconque des revendications précédentes, **caractérisé par le fait que** le capteur (23, 36) fournit un signal de position angulaire absolue par rapport à une position zéro de référence.

8. *Dispositif* selon l'une quelconque des revendications précédentes, **caractérisé par le fait que** l'aimant permanent (21, 41) est monté dans un évidemment (22) de l'élément intérieur tournant (6) de façon à ne pas faire saillie à l'extérieur de ladite face frontale.

9. *Dispositif* selon l'une quelconque des revendications 1 à 6 **caractérisé par le fait que** l'élément intérieur tournant (6) portant l'aimant permanent (21, 41) et une partie au moins du volant de commande (12) forment une seule pièce monobloc.

10. *Dispositif* selon l'une quelconque des revendications précédentes, **caractérisé par le fait que** l'aimant permanent (21, 41) est une barrette aimantée bipolaire ou un élément cylindrique dont les pôles sont situés de part et d'autre de l'axe de rotation de l'élément intérieur tournant (6).

11. Utilisation d'un *dispositif* selon l'une quelconque des revendications précédentes, pour l'obtention d'un codage fournissant la position angulaire absolue de l'élément intérieur tournant (6) par rapport à une position zéro déterminée de la partie fixe.

## Claims

1. Instrumented bearing device, for drive-by-wire steering wheel (12), comprising an outer element (1) and an inner element (6), one of which can move in rotation about an axis relative to the other which is fixed, by means of a bearing (13) arranged between said elements and provided with at least one row of rolling elements (14), and means of detecting the rotation parameters of the rotating inner element (6), **characterized in that** the inner element (6) comprises a first front face (6b) for fixing the steering wheel, **in that** the detection means comprise a magnetosensitive sensor (23, 36) arranged on a fixed part and a permanent magnet (21, 41) arranged on a rotating part, facing said sensor, with its polar parts either side of the rotation axis, the permanent magnet (21, 41) being mounted on a second front face (6a) of the inner element (6) on the side opposite to the steering wheel, and **in that** the magnetosensitive sensor (23, 36) is fixed to a printed circuit board (24) mounted fixed in rotation in a space defined between the bearing and a partition (27) sealing said space, the partition (27) being fixed to the outer element (1) and comprising a connector (28) provided with contact pins (29) electrically linked to the printed circuit board (24).

2. Device according to Claim 1, **characterized in that** the magnetosensitive sensor (36) comprises a plurality of Hall-effect cells (37) distributed around a point (38) corresponding to the rotation axis of the rotating part equipped with the permanent magnet (21).

3. Device according to Claim 2, **characterized in that** the magnetosensitive sensor (36) is produced in the form of an integrated circuit chip (39).

4. Device according to Claim 1, **characterized in that** the magnetosensitive sensor (23) comprises a magnetoresistance (31, 32) centred on the rotation axis.

5. Device according to any one of the preceding claims, **characterized in that** the partition (27) is formed on a sealing cover.

6. Device according to any one of the preceding claims, **characterized in that** the partition (27) comprises a connector (28).

7. Device according to any one of the preceding claims, **characterized in that** the sensor (23, 36) supplies a signal representing the absolute angular position relative to a reference zero position.

8. Device according to any one of the preceding claims, **characterized in that t**he permanent magnet (21, 41) is mounted in a void (22) in the rotating inner element (6) so as not to project outside said front face.

9. Device according to any one of Claims 1 to 6, **characterized in that** the rotating inner element (6) supporting the permanent magnet (21, 41) and at least a part of the steering wheel (12), form a single-piece part.

10. Device according to any one of the preceding claims, **characterized in that** the permanent magnet (21, 41) is a bipolar magnetized strip or a cylindrical element, the poles of which are situated either side of the rotation axis of the rotating inner element (6).

11. Use of a device according to any one of the preceding claims, to obtain a coding supplying the absolute angular position of the rotating inner element (6) relative to a predetermined zero position of the fixed part.

## Patentansprüche

1. Mit Sensorik versehene Wälzlagervorrichtung für ein Lenkrad (12) mittels Draht, die ein Außenelement (1) und ein Innenelement (6), von denen eines um eine Achse in Bezug auf das andere mit Hilfe eines Wälzlagers (13) drehbeweglich ist, das zwischen den beiden Elementen angeordnet und mit wenigstens einer Reihe Wälzkörper (14) versehen ist, und Mittel zur Erfassung der Rotationsparameter des drehbaren Innenelements (6) aufweist, **dadurch gekennzeichnet, dass** das Innenelement (6) eine erste Stirnseite (6b) zur Anbringung des Lenkrades aufweist, die Erfassungsmittel einen magnetempfindlichen Sensor (23, 36), der über einem feststehenden Teil angeordnet ist, und einen Permanentmagneten (21, 41) aufweisen, der an einem mit Bezug auf den Sensor rotierenden Teil mit seinen Polarteilen beiderseits der Drehachse angeordnet ist, wobei der Permanentmagnet (21, 41) an einer zweiten Stirnseite (6a) des Innenelements (6) auf der dem Lenkrad entgegengesetzt liegenden Seite montiert ist, und der magnetempfindliche Sensor (23, 36) auf einer gedruckten Leiterplatte (24) befestigt ist, die drehfest in einem Raum montiert ist, der zwischen dem Wälzlager und einem Deckel (27) ausgebildet ist, der diesen Raum verschließt, wobei der Deckel (27) an dem Außenelement (1) befestigt ist und eine Steckverbindung (28) aufweist, die mit Kontaktstiften (29) versehen ist, die elektrisch mit der gedruckten Leiterplatte (24) verbunden sind.

2. Vorrichtung nach Anspruch 1, **dadurch gekennzeichnet, dass** der magnetempfindliche Sensor (36) eine Mehrzahl Hallzellen (37) aufweist, die um eine der Drehachse des drehenden Teils, das mit dem Permanentmagneten (21) versehen ist, entsprechende Stelle (38) verteilt sind.

3. Vorrichtung nach Anspruch 2, **dadurch gekennzeichnet, dass** der magnetempfindliche Sensor (36) in der Form eines integrierten Schaltungschips (39) ausgebildet ist.

4. Vorrichtung nach Anspruch 1, **dadurch gekennzeichnet, dass** der magnetempfindliche Sensor (23) eine auf der Drehachse zentrierte Reluktanz (31, 32) aufweist.

5. Vorrichtung nach einem der vorhergehenden Ansprüche, **dadurch gekennzeichnet, dass** der Deckel (27) als ein Verschlussdeckel ausgebildet ist.

6. Vorrichtung nach einem der vorhergehenden Ansprüche, **dadurch gekennzeichnet, dass** der Deckel (27) eine Steckverbindung (28) aufweist.

7. Vorrichtung nach einem der vorhergehenden Ansprüche, **dadurch gekennzeichnet, dass** der Sensor (23, 36) ein Signal einer absoluten Winkelstellung in Bezug auf eine Referenz-Nullstellung erzeugt.

8. Vorrichtung nach einem der vorhergehenden Ansprüche, **dadurch gekennzeichnet, dass** der Permanentmagnet (21, 41) in einer Ausnehmung (22) des drehbaren Innenelements (6) derart montiert ist, dass er nicht über die Außenseite der Stirnseite hervorsteht.

9. Vorrichtung nach einem der Ansprüche 1 bis 6, **dadurch gekennzeichnet, dass** das den Permanentmagneten (21, 41) tragende Innenelement (6) und wenigstens ein Teil des Lenkrades (12) ein einstückiges Teil bilden.

10. Vorrichtung nach einem der vorhergehenden Ansprüche, **dadurch gekennzeichnet, dass** der Permanentmagnet (21, 41) ein bipolar magnetisierter Stab oder ein zylindrisches Element ist, dessen Pole beidseitig der Drehachse des drehbaren Innenelements (6) liegen.

11. Verwendung einer Vorrichtung nach einem der vorhergehenden Ansprüche zum Erhalt einer Kodierung, die die absolute Winkelposition des drehbaren Innenelements (6) in Bezug auf eine bestimmte Nullstellung des feststehenden Teils liefert.
